(19) Europäisches Patentamt

European Patent Office

Office européen des brevets

(11) **EP 1 560 354 A1**

(12) **EUROPEAN PATENT APPLICATION**

(43) Date of publication:
**03.08.2005 Bulletin 2005/31**

(51) Int Cl.$^7$: **H04H 9/00**

(21) Application number: **04090026.8**

(22) Date of filing: **28.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **DEUTSCHE THOMSON-BRANDT GMBH**
**78048 Villingen-Schwenningen (DE)**

(72) Inventors:
• **Baum, Peter G.**
**30539 Hannover (DE)**

• **Voessing, Walter**
**30455 Hannover (DE)**
• **Boehm, Johannes**
**37083 Göttingen (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(54) **Method and apparatus for comparing received candidate sound or video items with multiple candidate reference sound or video items**

(57) If there are a number of candidate sound items, which are derived from a candidate reference sound item and which are received together with noise, it is very difficult to automatically identify correctly from which reference sound item the received candidate sound item was derived. Correlation is used for comparing received sound items with candidate reference sound items. A measure value for the similarity of each pair of sound items is formed from the correlation, which measure value is high if the correlation is low. If this measure value is below a threshold, both sound items are determined as matching. Otherwise this measure value is stored together with a reference to the candidate reference sound item in a list. If a given number of list entries is reached and if the lowest measure value in the list is less than the second lowest measure value when divided by a predetermined factor greater '1', then the lowest measure value is determined as being a matching sound item.

Fig.1

EP 1 560 354 A1

## Description

The invention relates to a method and to an apparatus for comparing received candidate sound or video items with multiple candidate reference sound or video items, respectively, wherein the received candidate items are distorted for example by noise.

Background

If there are a number of candidate sound items, which are derived from a reference sound item, of which one is played and then recorded in a noisy and/or reverberated environment, it is very difficult to automatically identify correctly from which reference sound item the replayed or received candidate sound item was derived. MPEG 7 (ISO/IEC 15938-4) has standardised several fingerprint algorithms which can be used for comparing sound items, for example the AudioSpectrumFlatness measure (SFM) and the AudioSpectrumEnvelope (ASE).
The well-known correlation can be used for comparing recorded or received candidate sound items with multiple candidate reference sound items in order to determine the replayed or transmitted specific reference sound item.

Invention

Tests have shown that the above-mentioned AudioSpectrumFlatness measure SFM and the AudioSpectrumEnvelope measurement ASE are not robust enough for some applications.
A problem to be solved by the invention is to provide a more robust audio or video item identification in the presence of distortions like noise, echo or reverberation. This problem is solved by the method disclosed in claim 1. An apparatus that utilises this method is disclosed in claim 2.
Correlation is used for comparing one or multiple recorded or received candidate sound items with multiple candidate reference sound items. A special indicator, e.g. a scalar (i.e. a single number) representing a measure for the similarity of both sound items, which is robust against noise and reverb, is calculated from each one of the correlations carried out. If the correlation is high, this measure value is low, if the correlation is low, this measure value is high. Based on this indicator a robust decision whether or not two sound items are matching is taken. If this amplitude or level of this measure is below a certain threshold, both sound items are supposed to match, i.e. to be identical. Otherwise this scalar is stored together with a reference to the candidate reference sound item in a list and the next two sound items are compared. If the list reaches a number of entries that is greater than a pre-determined threshold value or if every candidate reference sound item has been compared, and if the lowest measure value in the list is less than the second lowest measure value when divided by a pre-determined factor greater '1', then the lowest measure value is regarded as being related to a matching sound item.

The comparison of two sound items is performed in the following way:
Optionally, a highpass filter, for example at 300Hz, is applied before the correlation step to both sound items to remove rumble, pop and wind noise.
Calculating the standard correlation between a candidate sound item and a candidate reference sound item. To reduce the required processor power and the required memory capacity, the correlation can be done by overlap-add or overlap-save methods for a pre-determined correlation range only, e.g. a correlation range of +0.5 to -1 second for sound items having a 7 second length.
Calculating a scalar $p_1$, $p_2$ or $p_3$ representing a robust criterion for the similarity of both sound items according to one of the following algorithms:

a) Root of the sum of the squares of the correlation values c(k) divided by the maximum value max(c (k)) of the correlation:

$$p_1 = \frac{\sqrt{\Sigma c(k)^2}}{\max(c(k))},$$

wherein 'k' is incremented by '1' from '0' to the total length of the signal. Optionally, $p_1$ is normalised by division by the correlation length.

b) The sum of the squares of the reference values t(k) (tuner signal) is multiplied by the sum of the squares of the measured values m(k) (microphone signal) and is divided by the sum of the squares of the correlation values:

$$p_2 = \frac{\Sigma t(k)^2 * \Sigma m(k)^2}{\Sigma c(k)^2}.$$

Optionally, one, two or all of the values t(k), m (k) and c(k) are normalised by division by their respective length.

c) Multiplication of probability $p_1$ and (optionally nonlinearly weighted) probability $p_2$ leading to probability $p_3$:

$$p_3 = \frac{\Sigma t(k)^2 * \Sigma m(k)^2}{\max(c(k)) * \Sigma c(k)^2}$$

In particular multiplying $p_1$ by the root of $p_2$ achieves best results.

A scaling of the above-used criterions does not change the comparison result (if the thresholds are adapted appropriately), since the comparison results are formed from number ratios.
Criterion a) works very good with pop music and speech signals whereby normally a single peak amplitude will occur in the correlation result. Criterion b) works very good with slow classical music, where the time period for a change in the music has a length of about the correlation length, leading to a broad peak in the correlation result. Advantageously, criterion c), i.e. a combination of a) and b) (e.g. multiplication of any power or root of $p_1$ by any power or root of $p_2$) works fine for all types of audio content.

In principle, the inventive method is suited for comparing received candidate sound or video items with multiple candidate reference sound or video items, respectively, wherein said received candidate items are distorted for example by noise or reverberation, said method including the steps:

- Comparing by correlation multiple ones of said received candidate items with at least one of said candidate reference items;
- Deriving from each one of the multiple correlations a value representing a measure for the similarity of a candidate item with a candidate reference item, whereby said similarity measure value is great if a correlation is bad;
- Determining that a current similarity measure value signals a matching of a current received candidate item and a current candidate reference item if said current similarity measure value has a level that is below a pre-determined threshold value;
- If said current similarity measure value has a level that is equal to or above said pre-determined threshold value, storing said current similarity measure value together with a reference to the current reference item in a list and carrying out the next one of said comparison steps;
- If the number of entries in said list reaches a value that is greater than a pre-determined threshold value, or if every candidate reference item has been compared, and if the lowest similarity measure value in said list is less than the value of the second lowest similarity measure value when divided by a pre-determined factor greater '1', determining that the lowest similarity measure value in said list relates to a corresponding matching pair of a candidate item and a candidate reference item.

In principle the inventive apparatus is suited for comparing received candidate sound or video items with multiple candidate reference sound or video items, respectively, wherein said received candidate item are distorted for example by noise or reverberation, said apparatus including:

- Means for receiving candidate sound or video items;
- Means for receiving or storing said candidate reference sound or video items;
- Means being adapted for:

  Comparing by correlation multiple ones of said received candidate items with at least one of said candidate reference items;
  Deriving from each one of the multiple correlations a value representing a measure for the similarity of a candidate item with a candidate reference item, whereby said similarity measure value is great if a correlation is bad;
  Determining that a current similarity measure value signals a matching of a current received candidate item and a current candidate reference item if said current similarity measure value has a level that is below a pre-determined threshold value,
  If said current similarity measure value has a level that is equal to or above said pre-determined threshold value, storing said current similarity measure value together with a reference to the current reference item in a list and carrying out the next one of said comparison steps;
  If the number of entries in said list reaches a value that is greater than a pre-determined threshold value, or if every candidate reference item has been compared, and if the lowest similarity measure value in said list is less than the value of the second lowest similarity measure value when divided by a pre-determined factor greater '1', determining that the lowest similarity measure value in said list relates to a corresponding matching pair of a candidate item and a candidate reference item.

Advantageous additional embodiments of the invention are disclosed in the respective dependent claims.

Drawings

Exemplary embodiments of the invention are described with reference to the accompanying drawings, which show in:

  Fig. 1 Simplified block diagram of a system in which the invention can be used;
  Fig. 2 Simplified flow chart for the inventive best match search.

Exemplary embodiments

The invention can be used for an automatic mobile audience measurement of audio suitable for both radio and TV, in-home and out-of-home. For instance, broadcasters want to know how many people are listening to a particular program. Instead of asking or interviewing listeners it is known to directly connect by cables a special measurement unit to the radio or to the TV the listener is using and to remotely collect time and station data from this measurement unit. However, such measurement unit is difficult to use or expensive or provides false results in case of mobile reception like in a car or in case of a mobile listener walking around e.g. in different rooms of his home.

The mobile hardware device which detects the radio or TV station a listener or panellist is listening to and which stores the listener's ID and which is worn by the listener is called a meter. One technology used in such meter to identify the station the panellist is listening to is local sound comparison, where the audio stream received via a microphone (MIC) is compared in the meter with different audio streams received via an embedded tuner (TUN2). The result of a comparison is because of disturbances and noise not a match or no-match but a probability for a match.

Local sound comparison compares in the meter the sound coming from the microphone with the one coming from the tuner. Since only one tuner is embedded in the meter, only one station at a time can be compared. That means that in the worst case all available radio stations are to be compared one after the other. As the number of receivable stations can be very high, there is a need to minimise the average number of comparisons needed to find the station the panellist is listening to.

The local sound comparison should include two states of the processing. A 'confirmation status' is a status in which the last comparison has determined a match. In this status it is tried to confirm that the identified station is still the correct one. Since it is highly probable that the panellist does not change the station within a following short time period, the station will be confirmed in most cases. If not the 'detection status' is entered. The detection status is defined by that no prior station is available and therefore theoretically all available stations have the same probability to match. The processing stays in the detection status until one station matches in the comparison processing. In this case the confirmation status is re-entered.

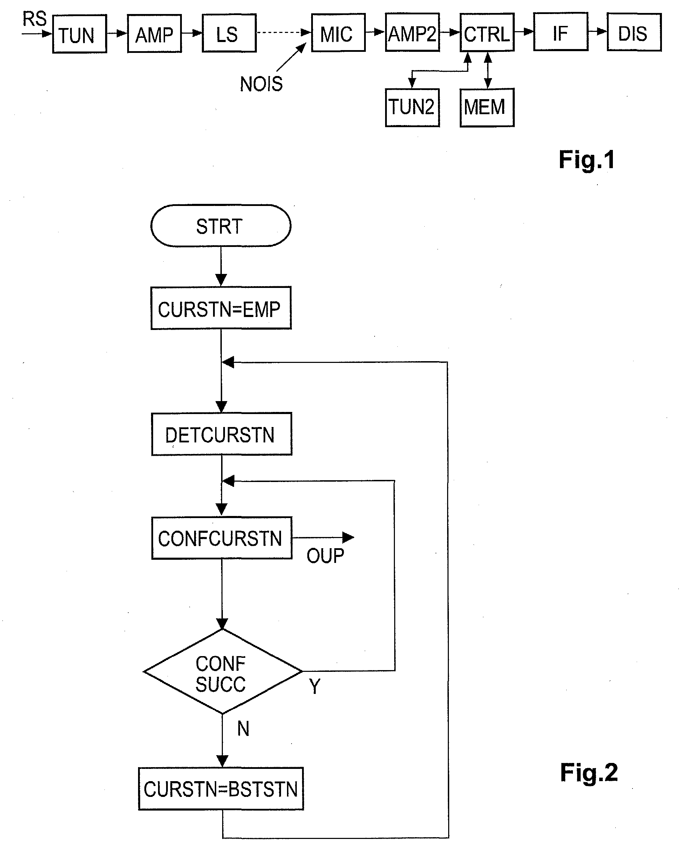

In Fig. 1 a radio signal RS is received and demodulated or decoded by a tuner TUN, amplified in an amplifier AMP and reproduced by a loudspeaker LS. The sound reproduced by a loudspeaker LS is received by microphone MIC together with noise NOIS. The microphone output is amplified in an amplifier AMP2, processed in a controller CTRL and output via an interface IF to e.g. a display DIS. The controller CTRL also receives (and selects) the program of an embedded tuner TUN2, or one of multiple reference sound items stored in a memory TUN2, and carries out the inventive correlation and measurements and calculations, thereby using a memory MEM.

Following the start STRT in the flow chart of Fig. 2, a parameter 'current station' CURSTN gets the start value 'empty' or '0'. In the next step DETCURSTN a current station is determined by comparing a corresponding station sound item with reference station sound items. In the following step CONFCURSTN a confirmation that the 'current station' is the correct one is performed in that for e.g. three times it is checked in step CONFSUCC whether or not the confirmation succeeded. A corresponding output OUP is provided. If it succeeded (output 'Y') for the first or second or third time the loop enters step CONFCURSTN again. If it did not succeed (output 'N'), in step CURSTN=BSTSTN the parameter 'current station' is set to the 'best station' determined in steps CONFCURSTN and CONFSUCC, and re-enters step DETCURSTN.

The above-described criterion c) takes into consideration not only the peak of the correlation, but also the ratios of the energies of the input signals to the energy of the correlation into account. Since this criterion is to be calculated only once for a comparison, that is e.g. every eight seconds, even such a complicated formula has nearly no impact on the required processing power for the complete search processing. This processing has several advantages:

d) Calculation duration - since the calculation of the correlation can be started during the recording process, the time for the whole comparison process is not recording time plus calculation time, but only recording time plus calculation of the last block plus calculation of the summary, which is on a standard DSP in the range of some ten or hundred milliseconds.

e) Scalability - the processing can very easily be adapted to specific MIPS, RAM or robustness demands. The following parameters can be changed:

e1) Signal length: Changing the signal length, does not change the MIPS and RAM demand (the number of calculations change the same way as the time to perform these calculations). The robustness is increased with increased signal length, but the station detection time is decreased.

e2) Sampling frequency: the processing runs e. g. with 3675Hz. The MIPS demand increase is more than proportional and the RAM demand increase is less than proportional to the sampling frequency. Sampling frequencies much lower than 3.6kHz will decrease the robustness. Likely, frequencies much higher than 4kHz will not significantly increase the robustness.

e3) Length of the correlation: the length of the correlation is at least as long as the required maximum de-synchronisation. Changing this length does not affect the speed of the station detection. MIPS and RAM demand are approximately proportional to this length.

As an alternative the reciprocals of the above criterions a) to c) can be used instead, whereby the thresholds are changed accordingly and the above described algorithm does not search for the lowest, but for the highest criterion value.

Tests have shown that the inventive comparison between transmitted and received sound items is carried out in a very robust way even in the presence of a lot of noise and reverberation, and that it is much better than SFM and ASE.

If a large amount of reference sound items are to be checked, the comparison will take a very long time period in which the sound item may have changed to a different sound item. To solve this additional problem, the invention includes several improvements:

A) The notion of 'favourites', which means a list of reference sound items which have a higher probability of being the correct one. For example, in the case of radio station identification this is a list of preferred stations a user is normally listening to. In the case of commercial identification for interactive TV, this is a list of commercials that are played much more often than others. The favourite list may be dynamic and may be adapted or adapt itself to new facts. These favourite reference sound items are compared more often than other reference sound items.

B) In the decision process, since the comparison process is 'fussy' due to additional noise and/or reverberation, even the correct comparison may in the presence of a lot of noise result in a low matching indicator. Instead of using a fixed threshold value for making a comparison decision, the decision process can be carried out by two different checks:

B.1) The comparison succeeds if the matching indicator has a level that is below a pre-determined threshold value.
B.2) The comparison succeeds if the matching indicator for one comparison has a level that is (e.g. below a given other threshold value and that is) more than a pre-determined factor below the matching indicator levels for several other comparisons.

C) Carrying out a robust confirmation': when comparing sound items in streaming media like Internet broadcast, standard radio channel or TV, it is in case of identification failure more probable that the comparison process is heavily disturbed by noise than that a user has switched the channel or stream. If a station has been identified and a confirmation that this is still the correct station fails, the station is therefore not immediately marked as not correct' but only in case the confirmation process has failed several times. Furthermore the identified station is compared in the confirmation process with the identified reference sound items plus several arbitrary chosen reference sound items. Only if the identified reference sound item matches much better than the other compared sound items it is regarded as being a correct match. Advantageously, by the inclusion of this kind of randomness additional robustness is introduced in the confirmation process.

The invention achieves a fast and robust identification and tracking of dynamically changing sound items.

The invention can be applied in the context of audience measurement. It can also be used for example in interactive TV (identification of commercials), automatic detection of illegal CD or DVD copies broadcast in the Internet, or music identification via cellular phone. Instead of sound items, video items can be compared correspondingly. In such case the loudspeaker is replaced by a display and the microphone is replaced by a camera. In order to make the item identification even more reliable, both, audio and video items can be compared in picture-related applications.

**Claims**

1.  Method for comparing (CTRL) received candidate sound or video items with multiple candidate reference sound or video items, respectively, wherein said received candidate items are distorted for example by noise (NOIS) or reverberation, said method including the steps:

    - Comparing by correlation multiple ones of said received candidate items with at least one of said candidate reference items;
    - Deriving (CTRL) from each one of the multiple correlations a value representing a measure for the similarity of a candidate item with a candidate reference item, whereby said similarity measure value is great if a correlation is bad;
    - Determining (CTRL) that a current similarity measure value signals a matching of a current received candidate item and a current candidate reference item if said current similarity measure value has a level that is below a predetermined threshold value,

        **characterised by**:

    - If said current similarity measure value has a level that is equal to or above said pre-determined threshold value, storing said current similarity measure value together with a reference to the current reference item in a list (MEM) and carrying out the next one of said comparison steps;

- If the number of entries in said list reaches a value that is greater than a pre-determined threshold value, or if every candidate reference item has been compared, and if the lowest similarity measure value in said list is less than the value of the second lowest similarity measure value when divided by a pre-determined factor greater '1',

  determining (CTRL) that the lowest similarity measure value in said list relates to a corresponding matching pair of a candidate item and a candidate reference item.

2. Apparatus for comparing received candidate sound or video items with multiple candidate reference sound or video items, respectively, wherein said received candidate item are distorted for example by noise (NOIS) or reverberation, said apparatus including:

   - Means (MIC, AMP2) for receiving candidate sound or video items;
   - Means (TUN2) for receiving or storing said candidate reference sound or video items;
   - Means (CTRL) being adapted for:

     Comparing by correlation multiple ones of said received candidate items with at least one of said candidate reference items;
     Deriving from each one of the multiple correlations a value representing a measure for the similarity of a candidate item with a candidate reference item, whereby said similarity measure value is great if a correlation is bad;
     Determining that a current similarity measure value signals a matching of a current received candidate item and a current candidate reference item if said current similarity measure value has a level that is below a pre-determined threshold value,

   **characterised by**:

     If said current similarity measure value has a level that is equal to or above said pre-determined threshold value, storing said current similarity measure value together with a reference to the current reference item in a list (MEM) and carrying out the next one of said comparison steps;
     If the number of entries in said list reaches a value that is greater than a pre-determined threshold value, or if every candidate reference item has been compared, and if the lowest similarity measure value in said list is less than the value of the second lowest similarity measure value when divided by a pre-determined factor greater '1',
determining that the lowest similarity measure value in said list relates to a corresponding matching pair of a candidate item and a candidate reference item.

3. Method according to claim 1 or apparatus according to claim 2, wherein said similarity measure values ($p_1$) are calculated by

$$p_1 = \frac{\sqrt{\Sigma c(k)^2}}{\max(c(k))},$$

wherein c(k) denotes said correlation values and max(c(k)) denotes the maximum value of the correlation values, and wherein 'k' is incremented by '1' from '0' to the total length of said sound or video item.

4. Method according to claim 1 or apparatus according to claim 2, wherein said similarity measure values ($p_2$) are calculated by

$$p_2 = \frac{\Sigma t(k)^2 * \Sigma m(k)^2}{\Sigma c(k)^2},$$

wherein c(k) denotes said correlation values and t(k) denotes said reference sound or video items and m(k) denotes said received sound or video items, and wherein 'k' is incremented by '1' from '0' to the total length of said sound or video item.

5. Method according to claim 1 or apparatus according to claim 2, wherein said similarity measure values ($p_3$) are calculated by

$$p_3 = \frac{\Sigma t(k)^2 * \Sigma m(k)^2}{\max(c(k)) * \sqrt{\Sigma c(k)^2}},$$

wherein c(k) denotes said correlation values and t(k) denotes said reference sound or video items and m(k) denotes said received sound or video items and max(c(k)) denotes the maximum value of the correlation values, and wherein 'k' is incremented by '1' from '0' to the total length of said sound or video item.

6. Method or apparatus according to claim 3 or 4, wherein the similarity measure values ($p_3$) are calculated by combination of corresponding $p_1$ and $p_2$ values, e.g. by multiplying the corresponding values of any power or root of $p_1$ by any power or root of $p_2$.

**7.** Method according to one of claims 1 and 3 to 6, or apparatus according to one of claims 2 to 6, wherein said candidate sound or video items and said candidate reference sound or video items are highpass filtered before they are compared in said correlation.

**8.** Use of the method according to one of claims 1 and 3 to 7 for determining in an automatic mobile audience measurement to which particular broadcast audio or TV program a listener is currently listening.

**9.** Use of an apparatus according to one of claims 2 to 7 for determining in an automatic mobile audience measurement to which particular broadcast audio or TV program a listener is currently listening.

**Fig.1**

**Fig.2**

**European Patent Office**

**EUROPEAN SEARCH REPORT**

Application Number

EP 04 09 0026

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 703 683 A (NIELSEN A C CO) 27 March 1996 (1996-03-27) | 1,2,7-9 | H04H9/00 |
| A | * column 1, lines 5-12 *<br>* column 4, lines 14-18 *<br>* column 14, lines 48-56 *<br>* column 1, lines 16-20 *<br>----- | 3-6 | |
| Y | US 6 574 596 B2 (BI NING ET AL) 3 June 2003 (2003-06-03) * column 5, lines 21-53 *<br>----- | 1,2,7-9 | |
| A | US 4 450 531 A (SEBASTIAN RICHARD ET AL) 22 May 1984 (1984-05-22) * column 4, lines 60-63 *<br>* column 5, lines 36-41 *<br>* column 5, lines 2-31 *<br>----- | 1-9 | |

TECHNICAL FIELDS SEARCHED (Int.Cl.7)

H04H
G10L

The present search report has been drawn up for all claims

| Place of search | Date of completion of the search | Examiner |
|---|---|---|
| The Hague | 22 July 2004 | Torcal Serrano, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

**EP 1 560 354 A1**

### ANNEX TO THE EUROPEAN SEARCH REPORT
### ON EUROPEAN PATENT APPLICATION NO.

EP 04 09 0026

22-07-2004

| Patent document cited in search report | | Publication date | Patent family member(s) | | Publication date |
|---|---|---|---|---|---|
| EP 0703683 | A | 27-03-1996 | US | 5594934 A | 14-01-1997 |
| | | | AU | 2853295 A | 04-04-1996 |
| | | | BR | 9504084 A | 09-09-1997 |
| | | | CA | 2155815 A1 | 22-03-1996 |
| | | | EP | 0703683 A2 | 27-03-1996 |
| US 6574596 | B2 | 09-05-2002 | US | 2002055841 A1 | 09-05-2002 |
| | | | AU | 3589300 A | 25-08-2000 |
| | | | CN | 1347547 T | 01-05-2002 |
| | | | EP | 1159735 A1 | 05-12-2001 |
| | | | JP | 2002536691 T | 29-10-2002 |
| | | | WO | 0046791 A1 | 10-08-2000 |
| US 4450531 | A | 22-05-1984 | CA | 1191264 A1 | 30-07-1985 |

EPO FORM P0459